Europäisches Patentamt

European Patent Office

Office européen des brevets

(19)

(11) **EP 1 515 241 A2**

(12) **EUROPEAN PATENT APPLICATION**

(43) Date of publication:
16.03.2005 Bulletin 2005/11

(51) Int Cl.⁷: **G06F 17/30**

(21) Application number: **04019257.7**

(22) Date of filing: **13.08.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **15.09.2003 US 662270**

(71) Applicant: **SURFCONTROL PLC
Congleton, Cheshire CW12 1DY (GB)**

(72) Inventor: **Maddox, Paul Christoper
Congleton Cheshire CW12 1DY (GB)**

(74) Representative: **Käck, Jürgen, Dipl.-Ing.
Kahler Käck Mollekopf
Patentanwälte
Vorderer Anger 239
86899 Landsberg (DE)**

(54) **Using semantic feature structures for document comparisons**

(57)    Document comparisons can be performed at a semantic level by utilizing a rules base (40) in which groups of rules are applied sequentially. In one implementation, (1) syntactic rules (46) are applied to a document to form a tagged sequence in which individual words are tagged with their syntactic categories, (2) ambiguity rules (52) are applied to the tagged sequence to resolve ambiguities, thereby providing a resolved tag sequence, (3) grammar rules (54) are applied to the resolved tagged sequence to determine semantic roles of individual tagged words, thereby providing a role-specific resolved tagged sequence, and (4) property rules (56) are applied to match properties (e.g., adjectives) with the words they modify, thereby providing a semantic feature structure. The semantic feature structure is then compared to at least one other structure.

FIG. 3

**Description**

TECHNICAL FIELD

The invention relates generally to monitoring network transmissions of textual items and more particularly to determining semantic similarity between at least one reference textual item and a network-transmitted textual item, such as an electronic mail message, a Web page or an instant textual message.

BACKGROUND ART

There are a number of important reasons for monitoring text-containing items that are received from or transmitted within a network. For example, a corporation may enforce an Internet access control policy in order to ensure that such access is primarily for business purposes. Many corporations also devise safeguards to ensure that potential intruders ("hackers") cannot gain illegal access to corporate computing resources via the Internet. As another example, the parents of a school-aged child may wish to take steps to increase the likelihood that the child is able to take advantage of the benefits of the Internet without exposure to inappropriate material.

Text-containing items (i.e., "textual items") that are transmitted via networks include World Wide Web documents (i.e., "Web pages"), electronic mail messages, and instant textual messages that may be exchanged using a chat or similar program. One technique for monitoring such documents is to invoke a document search for preselected keywords that are indicative of the subject matter to be filtered. A concern with a non-complex implementation of this technique is that a document describing a recipe for cooking chicken breasts may be filtered from delivery as a consequence of containing the term "breasts." More complex implementations may be used, such as Boolean implementations in which presentations of a document to a user of a network are blocked only if an "inappropriate" word is used with other preselected keywords or if an "offensive" word is not immediately preceded by a particular term (e.g., "chicken"). However, setting up the Boolean arrangement is too time consuming when done on an individual basis, such as by a parent. On the other hand, a universally applied Boolean arrangement may be relatively easily overcome by persons who identify the arrangement.

Another technique is to compare sentence structures of a document to reference sentence structures that represent documents that are to be filtered. That is, a syntactic comparison is performed. The concern is that sentences that are syntactically dissimilar may be semantically identical. Although expressed differently, there is no semantic difference between the sentence structure "Please pass me the salt." and the sentence structure "Pass the salt to me, could you?". A search through a document for one of the two orderly arrangements of words would not result in a "hit" if the document contained the other word arrangement. It follows that the syntactic approach does not provide the desired assurances to a parent and does not achieve the security and efficiency objectives of a corporate entity.

What is needed is an effective means of providing document comparison and/or recognition.

SUMMARY OF THE INVENTION

Semantic comparisons of computer readable textual items are achieved using a rules base that includes syntactic rules, grammar rules and property rules. The rules base may also include ambiguity rules. By applying the different groups of rules in a successive manner, the meaning of sentence structures can be considered, rather than limiting consideration to syntactic arrangements.

The syntactic rules of the rules base associate words with syntactic categories, such as nouns, verbs and adjectives. Parts-of-speech tagging may be used to associate individual words to the appropriate syntactic categories. For embodiments in which the ambiguity rules are included, the syntactically tagged textual item is processed to resolve semantic ambiguities. For example, the ambiguities resulting from the use of pronouns may be resolved. Ambiguities resulting from misspellings and the use of slang may also be considered. Slang resolution may play an important role in applications in which instant textual messages (instant messaging or SMS) to children or others are to be screened.

The grammar rules of the rules base determine the semantic rules of at least some of the words of the sentence structures within the textual item. Optimally, the grammar rules enable deductions for each word's semantic feature in the sentence structure. Thus, words that were categorized as nouns may be classified as being "actors" or "participants" of actions described in the sentence structures.

The property rules associate semantic properties with particular words. For example, a semantic property defined by an adjective (e.g., "red") is associated with a particular noun (e.g., "ball"). At least some of the property rules are based on adjacencies of the words within the sentence structures.

The output of the application of the rules base is a semantic feature structure. The output can then be compared to other semantic feature structures. In a preferred embodiment, the output is compared to a number of reference semantic feature structures in order to determine whether the original textual item should be presented to a user of a network. Thus, in the application in which the invention is used to filter instant textual messages directed to a child, the reference semantic feature structures are representative of inappropriate material.

To compare two structures, common points of the structures are identified and a similarity score is determined. To consider as much of the structure as effectively as possible, the structure is recursively traversed in a depth-first or breadth-first manner from each common point. When there are no more common points to be scored, the final scoring is determined. A threshold value of similarity may be predetermined, so that all textual items that exceed the similarity threshold will be classified as "the same," which in the case of content filtering will result in the contained text being blocked from presentation. In addition to monitoring instant textual messages, the invention may be used to monitor Web pages and electronic mail messages received or sent over the global communications network referred to as the Internet. Similar applications of the invention follow the same sequence of steps.

An advantage of the invention is that the textual items/documents are considered on a semantic level, rather than merely on a keyword level or a syntactic level.

## BRIEF DESCRIPTION OF THE DRAWINGS

Fig. 1 is an example of a topology of a network that is adapted for document comparisons using semantic feature structures.

Fig. 2 is a block diagram of relevant components of a personal computer that is adapted to implement the invention.

Fig. 3 is a block diagram showing the different groups of rules for implementing the invention.

Fig. 4 is a process flow of steps for generating and employing a semantic feature structure.

Figs. 5 and 6 are alternative examples of semantic feature structures in accordance with the invention.

Fig. 7 is a process flow of steps for performing the comparisons of Fig. 4.

## DETAILED DESCRIPTION

Document comparisons using semantic feature structures may be executed either at a network-wide level or at a single personal computer.

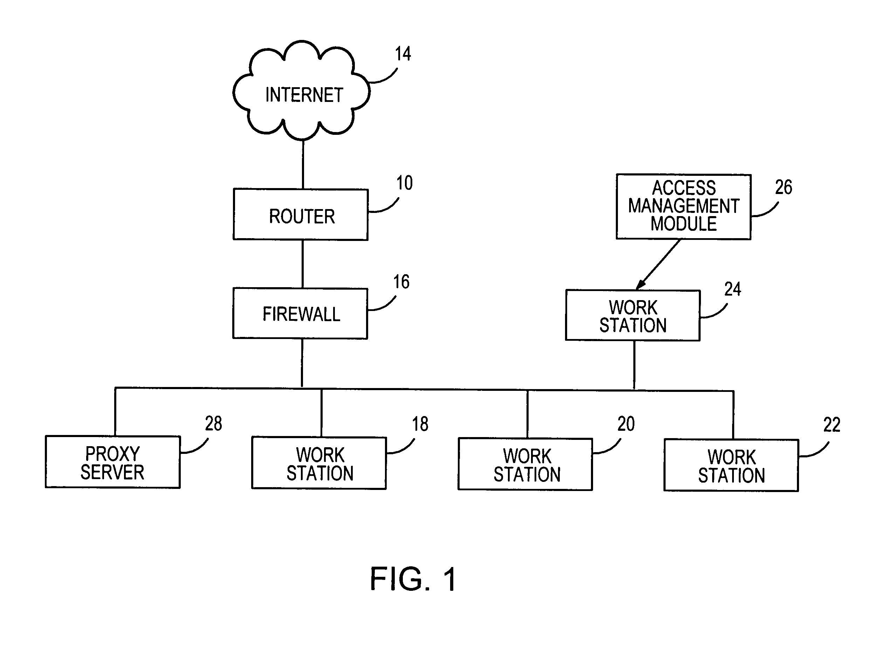

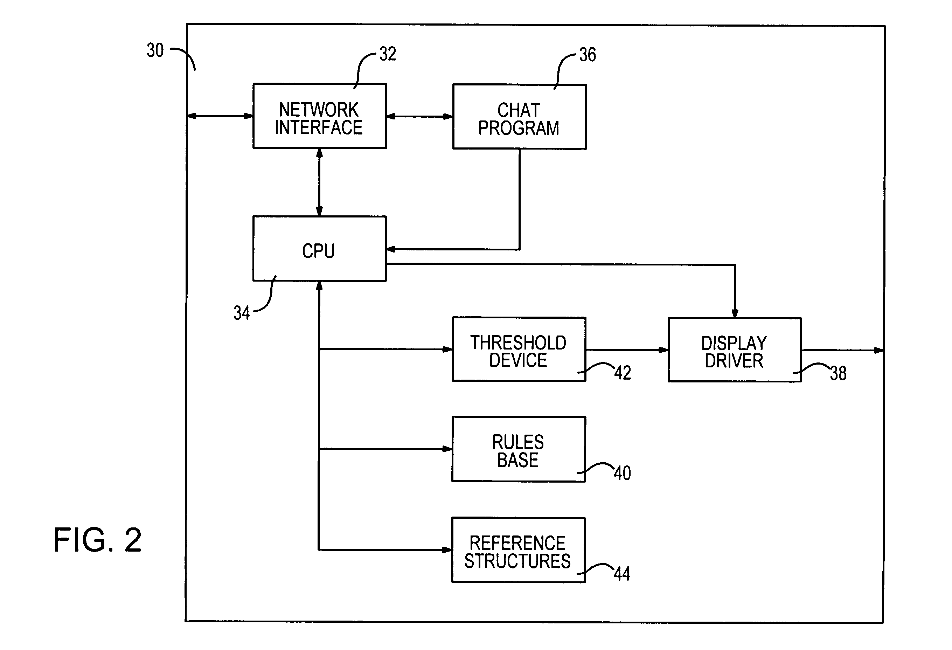

Fig. 1 represents one possible arrangement for monitoring activity within a network of an organization, while Fig. 2 shows selected components of a single computer, such as one used by a child during the exchange of instant textual messages.

In the example network of Fig. 1, a router 10 provides access to the global communications network referred to as the Internet 14 for an organization that is protected from unwanted intruders by a firewall 16. A number of conventional user work stations 18, 20 and 22 are included as nodes of the network. A fourth work station 24 may be identical to the other work stations, but is dedicated to providing access control management, as indicated by the connection to the access management module 26. The work station 24 may be a conventional desktop computer having a plug-in or built-in access control module for performing document comparisons, as well as other network monitoring features that are not relevant to the invention.

The network also includes a proprietary proxy server 28 that is used in a conventional manner to enable selected services, such as Web services. A Web proxy server is designed to enable performance improvements by caching frequently accessed Web pages. As is well known in the art, a number of different network protocols are used within the Internet. Protocols that fall within the Transmission Control Protocol/Internet Protocol (TCP/IP) suite include the HyperText Transfer Protocol (HTTP) that underlies communications within the World Wide Web, TELNET for allowing access to a remote computer, the File Transfer Protocol (FTP), and the Simple Mail Transfer Protocol (SMTP) to provide a uniform format for exchanging electronic mail. The network topology of Fig. 1 is shown as an example configuration and is not meant to limit or constrain the description of the invention.

In the embodiment of Fig. 2, a personal computer 30 is shown as including a network interface 32 for exchanging information via a network, such as the Internet. The type of network interface is not significant, since it may be a conventional modem or a high-bandwidth adapter. The computer includes a Central Processing Unit (CPU) 34 for controlling processing during computer operations. Merely as one example, the CPU is used in executing instructions for a chat program 36, which may be used by a child in exchanging instant textual messages with users of remote computers, not shown.

Upon receiving an instant textual message, Web page, electronic mail message, or other textual item in electronic form, the CPU 34 may be used in the determination of whether the text-containing information should be forwarded to a display driver 38 connected to a monitor or the like. That is, a determination is made as to whether the information is "appropriate" material. The appropriateness may be based upon the role of protecting a child from exposure to certain topics. In the network embodiment of Fig. 1, the appropriateness may be a function of assuring corporate security or increasing the likelihood that the work stations 18, 20 and 22 are being used for business purposes.

The document comparisons to be described below may also be used to detect potentially unlawful exchanges, such as portions of documents that are protected under Copyright Law. By performing document comparisons using the semantic feature structures to be described below, plagiarized documents can be recognized even when copying is not done verbatim.

As shown in Fig. 2, the processing uses a rules base 40 and may use a threshold device 42. The rules base is a storage of rules for forming semantic feature structures. The rules base may be stored in any type of non-volatile memory. After a semantic feature structure is formed for a document and compared to at least one other semantic feature structure, the optional threshold device 42 determines whether the similarity between two structures exceeds a threshold level. In one application of the invention, the incoming text message or Web page that is determined to contain inappropriate material (because it bears a close similarity to a reference semantic feature structure) is blocked from being passed to the display driver 38 for presentation to the user of the personal computer 30. Such reference structures 44 are shown as being stored separately from the rules base 40, but only for purposes of explanation. That is, the rules base and reference semantic feature structures may be stored in a single memory component,

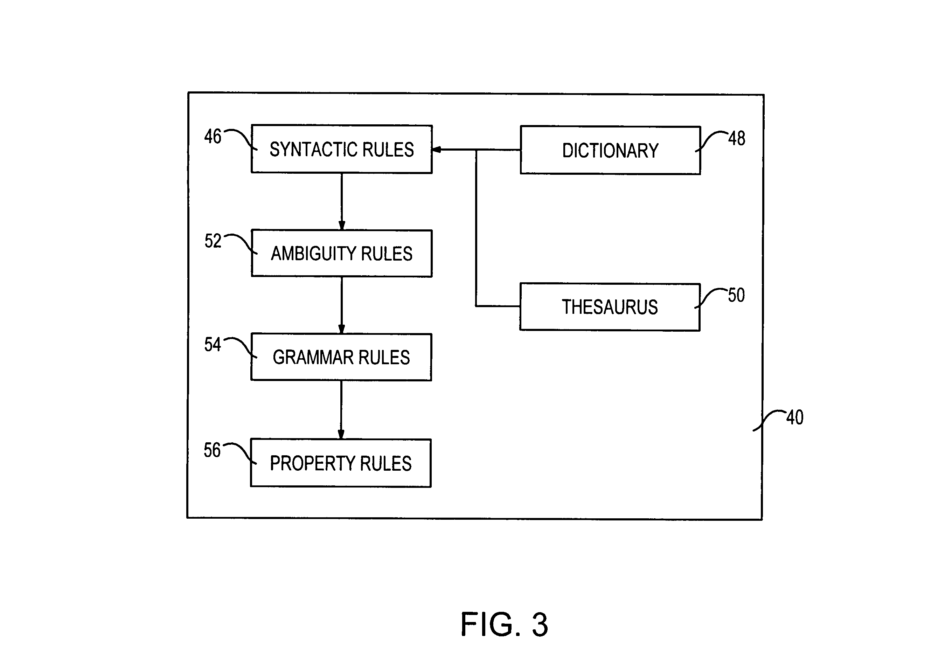

Fig. 3 shows the rules base 40 as including four separate groups of rules. However, other arrangements of rules may be substituted without diverging from the invention. A first set of rules is collectively referred to as the syntactic rules 46. The syntactic rules associate individual words of a document with a syntactic category. Since semantic features of sentence structures are often related to the syntactic category of each word in the sentence structure, parts-of-speech tagging may be used. Parts-of-speech tag sets may vary in size. For example, there may be between thirty and sixty syntactic categories. In some applications, groups of categories are used, rather than specific categories. For instance, there may be separate syntactic categories for singular nouns and plural nouns, or there may be a single category for all nouns. Other common syntactic categories include adjectives, verbs and adverbs. The integration of a parts-of-speech tagger with a particularly large tag-set size results in a greater need to group categories, but may offer increased scope for creating grammar rules based on more discrete category groups.

The syntactic rules 46 are shown as being coupled to a dictionary 48 and a thesaurus 50. The dictionary represents the mechanism for allowing the syntactic rules to categorize particular words. The actual embodiment of the dictionary is not significant. The force of the document comparisons is enhanced by using the thesaurus 50, since synonyms can be recognized and substituted. However, it is more likely that the thesaurus will be utilized at the point of comparing two documents, rather than at the point of applying the syntactic rules.

The rules base 40 also includes ambiguity rules 52 which are designed to resolve ambiguity issues, such as those raised by the use of pronouns, slang and misspelled words.

Grammar rules 54 are used to deduce semantic features of the individual words, which were tagged using the syntactic rules 46. The semantic features of a word are directly related to the activities described in the sentence structure in which the word resides. Examples of semantic features include "actor" and "participant" for nouns and "transfer" for a verb.

Finally, property rules 56 associate semantic properties with particular words. Thus, adjectives can be associated with the nouns to which they refer. At least some of the property rules are based upon adjacencies of words within a sentence.

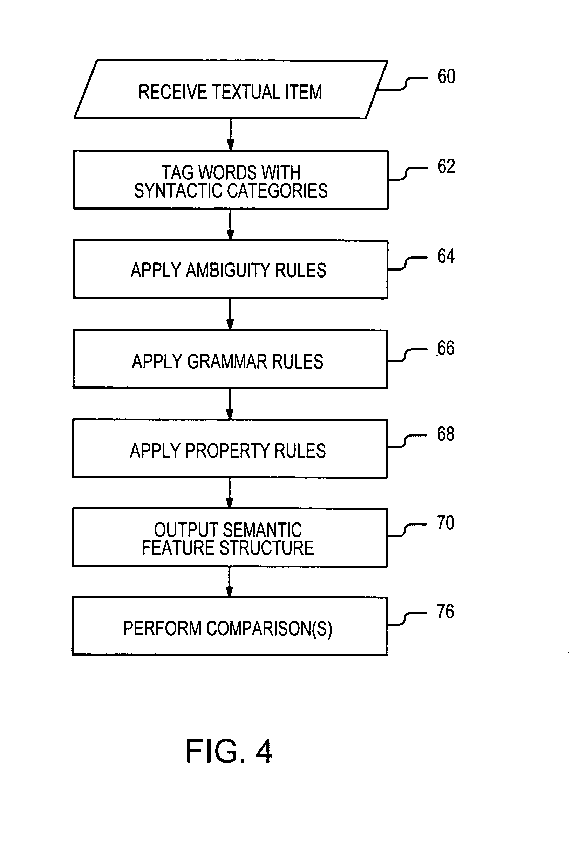

Fig. 4 illustrates a process flow of steps for generating a semantic feature structure, so that the structure can be compared to at least one other structure: At step 60, a textual item is received. As previously noted, the textual item may be an instant textual message, a Web page, an electronic mail message, or other text-containing item that is transmittable in an electronic form over a network. In order to compare the textual item to one or more other documents, a semantic feature structure is created.

At step 62, the words of the textual item are tagged with their appropriate syntactic categories. The approach to tagging the words is not critical to the invention. In one implementation, a parts-of-speech tagger is used. The syntactic rules 46 are applied to form a tagged sequence, such as one in which each word is followed by a "/" and a category. An example of a tagged sequence is as follows:

A/dt  red/jj  modem/nn
transfers/vbp analog/jj data/nns
into/in digital/jj data/nns

Words tagged with syntactic category

where dt indicates a determiner, jj indicates an adjective, nn indicates a singular noun, vbp indicates a non-third party singular present tense noun, nns indicates a plural noun, and in indicates a preposition.

As will be recognized by persons skilled in the art, the syntactic rules are primarily lexical, but the determination of the proper syntactic category for many words requires consideration of the use of the words within sentences.

At step 64 of Fig. 4, the ambiguity rules are applied to the tagged sequence from step 62. The ambiguity rules may be considered as pre-processing rules intended to reduce the likelihood of errors when the grammar rules are applied at step 66 in order to deduce semantic features. A number of different pre-processings may be carried out, depending upon the particular application. Perhaps most important, pre-processing should include the resolution of pronouns into their reference. By building this functionality into an early step, the complexity of the grammar rules can be reduced, as can be the later structure comparisons. Typically, the resolution of pronouns merely involves a stack of particular nouns in use and the association of the pronouns by stepping through each word. Other pre-processing resolutions may involve spell checking and the consideration of slang, particularly if the application relates to screening instant textual messages.

The grammar rules applied at step 66 relate to the forms and structures of words (morphology) and to their customary arrangement in phrases and sentences. The input for the application of the grammar rules may be in the format shown above by example or may be in the following format:

| Words with syntactic tag | | | | | | | | | |
|---|---|---|---|---|---|---|---|---|---|
| | a | red | modem | transfers | analog | data | into | digital | data |
| Tags | dt | jj | nn | vbp | jj | nns | in | jj | nns |

The output of step 66 is one in which the semantic roles of the individually tagged words are identified. Thus, the output is a role-specific tagged sequence. The routine for matching semantic features to words may be based on Context Free Grammar (CFG). Sample semantic features are:

| Sample semantic features | |
|---|---|
| ACTOR | Actor performing an act |
| PART | Participant in an act |
| PTRANS | Physical transfer |
| CTRANS | Conceptual transfer |
| TOOL | Indirect participant |
| CONCP | Indirect conceptual participant |

Semantic feature rules follow the structure of many CFGs, wherein the left-hand part of the rule matches against the current data, with the right-hand part adding structure. However, the underlying structure is different than conventional CFGs in that it always remains available for the matching of rules. For this reason, an optional implementation allows rules to specify on what level the rules are to operate. This optional implementation is useful in allowing meta rules, as well as rules that operate recursively. A sample grammar rule for deducing a semantic feature is:

$$\text{dt } (\_), \text{ nn } (X), \text{ vbp } (\_) \; - > \; \text{actor } (X)$$

Sample feature rule

The sample feature rule follows the convention in which underscores indicate that the text value is ignored and uppercase variable names will be unified to the text value. The sample feature rule specifies that if a determiner, a single noun, and a possessive verb exist in a sentence, then the word that matches against X (the noun) is to be marked as an "actor."

The sample feature rule matches only against a single word, i.e., "modem," since it specifies an exact match against a single noun. In practice, it may be desirable to match against all types of nouns. To this end, there are at least two options:

1. Allow "fuzzy" matching of rules to multiple tags. This may be done by using truncation, such as nn*(X) rather than simply nn(X) or nns(X), so that all nouns are identified, rather than just singular or plural nouns.

2. Create more rules for each category in the noun group.

Perhaps the most effective approach is to use both options in rule creation. If there is a rule simply for determiner and noun, option 1 may be used, allowing the method to specify "any noun," rather than individual rules for singular and plural nouns. For more complicated rules in which ambiguity may affect the results, using multiple rules (option 2) reduces the susceptibility of the method to ambiguity.

In some situations, it may be beneficial to apply rules for ignoring certain adjacent words. This is particularly true if words in a sentence are to be matched regardless of their associated adjectives. As one example, the below rule may be used in linking two nouns when considering a prepositional phrase.

$$nn(X) \ in \ (Y) \ nn(Z), \ X=Z$$
$$\rightarrow \ part(X), \ ctrans(Y)$$

(If nouns (with adjectives removed) are outside a preposition, we assume transfer. Dictionary lookup to decide if physical or conceptual.)

Sample rules to derive semantic features

At this stage, there is no interest in which properties (primarily adjectives) the particular relationship contains. Thus, a separate layer may be used as a means for matching without properties. Filtering syntactic categories, the second layer may be easily created, as shown below:

| Additional tag layer | | | | | | | | | |
|---|---|---|---|---|---|---|---|---|---|
| | a | red | modem | transfers | analog | data | into | digital | data |
| Tags | dt | jj | nn | vbp | jj | nns | in | jj | nns |
| Tags2 | dt | | nn | vbp | | nns | in | | nns |

Rules operating on a structure not involving properties can then operate only upon the Tags2 layer. The use of different layers allows rules to be created more simply, but more specifically, so as to operate with reduced ambiguity. The creation of layers may be achieved programmatically or with a primary set of rules applied at the start of rule application.

At step 68, the property rules are applied for associating semantic properties with the previously identified semantic features. Using a set of rule structures similar to the grammar rules, properties can be associated with their correct feature. A sample property rule, which associates all adjectives with their preceding nouns, is as follows:

$$jj(X), \ nn(Y) \rightarrow assoc\_prop(X,Y)$$

Sample property rule

For situations in which multiple adjectives are used for a single semantic feature, rules with multiple adjective parameters may be included within the rules base. Therefore, a sentence that includes the phrase "large red bouncy ball" would match using a rule as follows:

jj (A) , jj (B) , jj (C) , nn (X)
-> assoc_prop (A,X), assoc_prop (B,X) ,
assoc_prop (C,X)

Multiple adjectives property rule

A concern is that an adjective may be the subject of more than one rule, as would be case with the term "bouncy" for both of the sample rules identified above. A solution would be to restrict association of a property to a single rule application.

In addition to associating adjectives with nouns, adverbs are associated with verbs or adjectives. In a similar manner to the property rules already described, rules may be created to associate properties to action and transition semantic features. For example, if the example sentence were to be changed to "A red modem quickly transfers analog data to digital data," the relevant rule would associate the adverb "quickly" with the verb "transfers."

Although simple associations of properties operate well if the object remains unchanged, the system must also support changes of an object's state. In the case of the modem example, "data" has a transition from "analog" to "digital." Although both terms are adjectives and could simply be added as properties, the result would be to lose the concept of "data" changing type and would introduce contradiction. The problem can be resolved by time stamping objects with their properties as they are specified linearly in the original text. This provides a way of tracking the transition undertaken by an object.

The rules need not be specific as to how to deal with an object having a changing state, since the process could be implemented as part of the property association routine. Thus, in the previously stated example of a property rule

jj(X) , nn (Y) - > assoc_prop (X,Y)

Sample property rule

the semantic feature structure being created could show that there is a transition from state s0 to the state s1, such as follows:

| FEAT: ACTOR | FEAT: PARTICIPANT |
|---|---|
| VAL: modem | VAL: data |
| TRANS: | TRANS:<br>s0-s1: ctrans |
| PROPS:<br>red | PROPS:<br>s0: analog<br>s1: digital |

Participant changing state from s0 to s1

Although this semantic feature structure specifies the objects involved in the sentence, the relationship between the objects is unspecified. Thus, a set of rules must be created to specify the relationships. Discrete nodes, although encapsulating a large portion of the meaning, do not encapsulate sufficient information to properly represent the intention of the sentence or sentences. A sample rule for linking an actor performing an operation to a participant

could be:

```
actor (X) ,  vbp (Y) ,  part (Z)  - >

acts_upon (X, Y, Z)
```

Sample property rule

Such a rule is different than other rules in that it does not create or amend a node. Rather, the rule links two nodes. It should be noted that the terms "modem" and "data" have already been categorized as features for which rules may mix tags or features as needed. The result of applying the sample rule could be as follows:

| FEAT: ACTOR | | FEAT: PARTICIPANT | |
|---|---|---|---|
| VAL: modem | ACT<br>Value: transfers | VAL: data | |
| TRANS: | | TRANS:<br>s0-s1: ctrans | |
| PROPS:<br>red | | PROPS:<br>s0: analog<br>s1: digital | |

Structure with actor's act

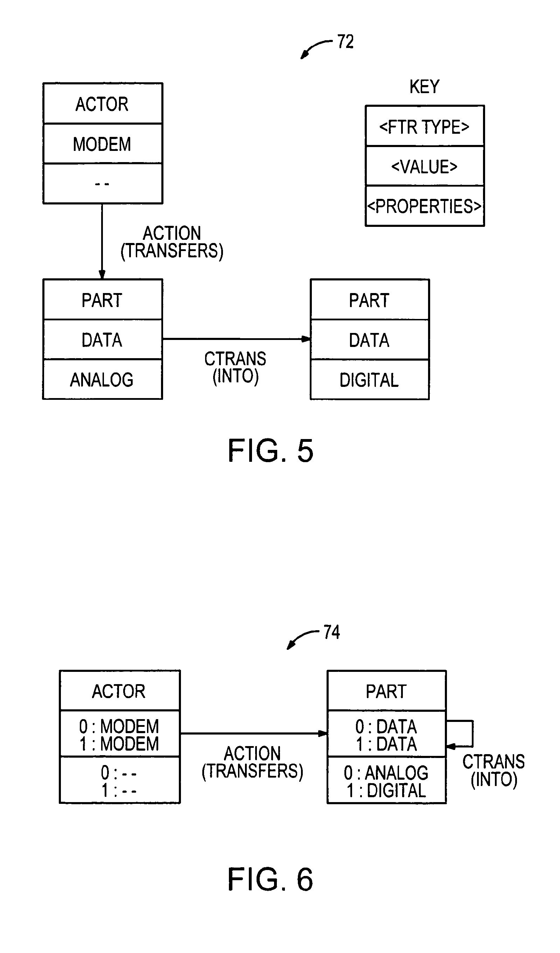

At step 70 of Fig. 4, the resulting semantic feature structure is completed. Figs. 5 and 6 are examples of two other possible semantic feature structures 72 and 74, respectively, which may be used in accordance with the invention. In Fig. 6, the transition is represented recursively using a stack of properties and using arrows.

Returning to Fig. 4, the semantic feature structure is then compared to one or more other semantic feature structures, as indicated at step 76. The comparison is performed to determine semantic similarity, rather than merely syntactic similarity. For applications in which corporate or parental screening is to occur, reference semantic feature structures are pre-formed to provide a library of structures which are compared to each document for which screening is to be applied.

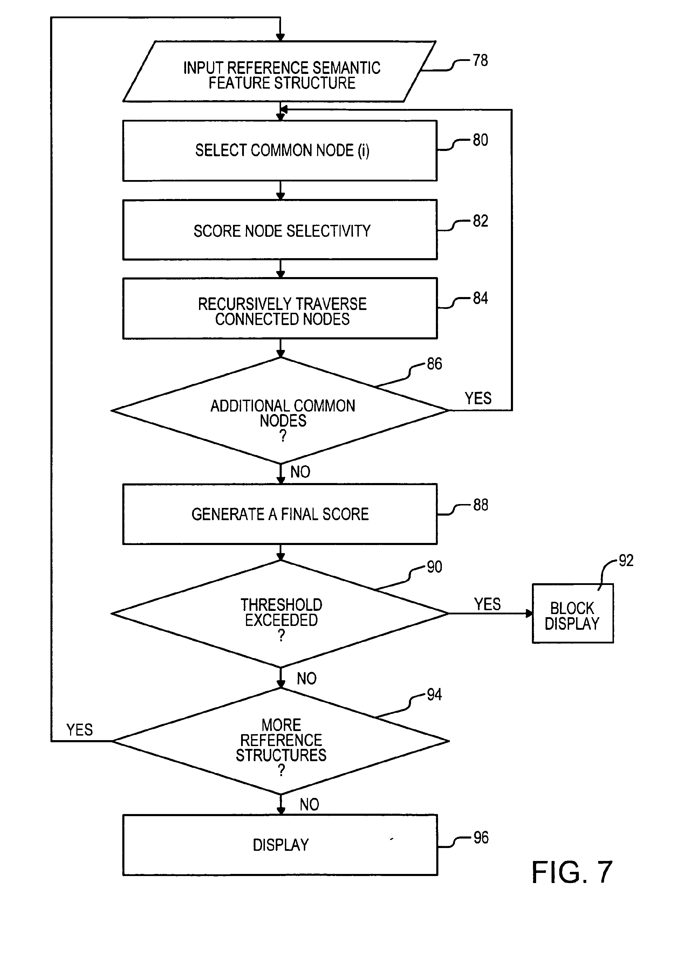

Fig. 7 illustrates one example of a process flow of steps for comparing a pair of semantic feature structures. At step 78, a reference semantic feature structure is input for comparison to the semantic feature structure under consideration. Typically, only a pair of documents are considered at one time. However, simultaneous comparisons of three or more structures are within the scope of the invention.

At step 80, a common node is selected. As one example, one of the two nodes of the structure 74 of Fig. 6 may be selected, if it is a node having commonality with a node of the reference semantic feature structure. A common node can be selected iteratively by stepping through each node in the structure under consideration and comparing the node to each node in the reference structure. If the word of a node of the reference structure matches with a word of a node of the structure under consideration, the features of the two nodes are compared. After a node has been matched, it is marked in order to prevent duplication of processing.

The underlying principle of the invention is that two sentences should produce a similar structure if they are similar in meaning. For this reason, structure comparison can be relatively non-complex, much like marking the similarities of any pointer-based tree structures.

The two nodes of the two structures are scored on similarity at step 82. The nodes are compared on the basis of feature types, values, transfers and properties. Connections with other nodes ("child" nodes) may also be considered, as indicated by step 84. A floating-point score of similarity is established for the nodes.

A score ($score_i$) for a pair of common nodes may be determined algorithmically as a sum of the matching aspects ($ss(i)$) and a weight based on the closeness of the parent node in question. For example:

$$score_i = ss(i) + \sum_{c=1}^{c=numc} ss(c) \times \frac{1}{numc \times dist_c}$$

Iterative scoring of node i

where c represents the "child" node, numc represents the number of children, and $dist_c$ represents the distance from the parent node (i) in question.

An alteration to the algorithm would be to remove the weighting factor $dist_c$. This would result in nodes being valued equally, regardless of their distance from the parent node (i). Also, rather than summing the single score for each child node, a more effective method may be to recursively sum the final score of each child node.

The recursive traversal of connected nodes is represented at step 84 in Fig. 7. The nodes are recursively traversed in a depth-first or breadth-first manner. The traversal continues until every node that is directly or indirectly connected to the common (parent) node has been considered in determining the final score for that node.

The process then continues to decision step 86 of determining whether there are any additional common nodes. For portions of the semantic feature structure that are not connected to a previously processed common node, the process loops back through steps 80, 82 and 84.

When a negative response is generated at step 86 (i.e., all common nodes have been score), a final score may be generated at step 88. Any of a variety of different techniques may be employed. One technique is to determine a ratio score for each previously considered common node and then calculate the final score as a result of the ratio scores. For example, a ratio score can be taken in which an output of 0.0 indicates that the two structures were identical with respect to the two nodes, while a score of 1.0 indicates a minimum similarity. This has the advantage that regardless of the size or summing of the score ratios, a score of 0.0 will always remain the boundary of being identical. A possible algorithm for determining the ratio score for the node i across both structures is as follows:

$$r(A_i, B_i) = 1 - \frac{|s(A_i) - s(B_i)|}{max[|s(A_i) - s(B_i)|]}$$

Ratio score for node i across both structures

where $A_i$ is the node i for the structure under consideration, $B_i$ is the common node for the reference structure, $r(A_i, B_i)$ is the ratio score for the node i, $s(x)$ is the final score for the node, and max([e]) is the maximum value for the expression e.

After the ratio score for each common node has been calculated, the scores can be summed to produce a single scalar value of similarity. Again, the boundary of being identical is 0.0. A possible algorithm for the final score in determining the similarity of the two structures (A and B) is:

$$FINAL(A,B) = \sum_{i}^{i=allc} r(A_i, B_i)$$

where allc indicates all common nodes. It should be noted that the various algorithms can be modified or replaced with other scoring systems that accurately determine similar and different structures.

In decision step 90, it is determined whether the final score calculated at step 88 exceeds a given threshold of similarity. If an affirmative response is generated in an application in which the issue is whether the document is to be presented to a user of a network, the document is blocked from display, as indicated at step 92. However, the consequences of determining that the threshold has been exceeded will depend upon the application.

A negative response at step 90 leads to step 94, in which it is determined whether another reference structure is to be compared to the semantic feature structure in question. If yes, the process loops back to step 78 and the next semantic feature structure is input. Conversely, if no reference structures remain for the comparison process, the original document is passed for display at step 96. For an application in which the document is an instant textual message, the message is presented to the target individual. On the other hand, if the document is a Web page requested by an employee of a corporation, the Web page information is enabled for transmission to the work station of the employee. The processing at step 96 will depend upon the application.

As previously noted, the processing may include consideration of synonyms. Since the same meaning may commonly be expressed using different words, the semantic comparison system is most effective if the system supports the matching of synonyms. For example, the system should consider the terms "small" and "little" as being identical. A non complex implementation would be one in which a one-to-one word list is generated, where the left-hand word entry would be considered to be the same as the right-hand word entry. More efficient methods that are bidirectional and use one-to-many relationships may also be used.

**Claims**

1. A method of enabling semantic comparisons of computer readable textual items comprising:

generating a rules base (40) as a mechanism for implementing said comparisons, including:

(a) defining syntactic rules (46) for associating syntactic categories with individual words within sentence structures;
(b) defining grammar rules (54) for determining semantic roles of at least some of said words within said sentence structures; and
(c) defining property rules (56) for associating semantic properties with particular said words, at least some of said property rules being based upon adjacencies of said words in said sentence structures;

enabling applications of said rules base to each of a plurality of said textual items (60), wherein applying said rules base to a specific said textual item generates an output (70) representative of said syntactic categories and said semantic roles and properties determined to be associated with words within sentence structures of said specific textual item; and
enabling comparison (76) of said output to at least one second output that is representative of syntactic categories and semantic roles and properties determined to be associated with words within sentence structures of another textual item.

2. The method of claim 1 wherein applying said rules base (40) to said specific textual item includes assigning syntactic tags to said words within said sentence structures of said specific textual item, said syntactic tags being indicative of said syntactic categories.

3. The method of claim 2 wherein generating said rules base (40) further includes defining ambiguity rules (52) specific to resolving syntactic and semantic ambiguities, including ambiguities relating to uses of pronouns.

4. The method of claim 3 wherein defining said ambiguity rules (52) includes establishing rules relating to spelling and idiomatic language.

5. The method of claim 3 wherein applying said rules base (40) to said specific textual item includes:

(a) using said syntactic rules (46) to form a tagged sequence in which said words are individually tagged with designations of associated said syntactic categories;
(b) applying said ambiguity rules (52) to said tagged sequence in order to resolve at least some of said ambiguities, thereby providing a resolved tagged sequence;
(c) applying said grammar rules (54) to said resolved tagged sequence to determine said semantic roles of said individually tagged words, thereby providing a role-specific resolved tagged sequence; and
(d) applying said property rules (56) to said role-specific resolved tagged sequence to associate said properties with said words.

6. The method of claim 1, 2, 3, 4 or 5 wherein defining said syntactic and grammar rules (46 and 54) includes establishing rules for identifying nouns within said sentence structures and for classifying at least some of said nouns as being actors or being participants of actions described by said sentence structures.

7. The method of claim 1, 2, 3, 4, 5 or 6 wherein enabling said applications of said rules base (40) includes generating said outputs as semantic feature structures, each said semantic feature structure being indicative of a meaning of each said sentence structure of said textual item to which said rules base is applied in generating said semantic feature structure.

8. The method of claim 7 wherein generating each said semantic feature structure includes identifying actions, actors and participants described in said sentence structures of said textual item from which semantic feature structure was generated.

9. The method of claim 8 wherein enabling said comparison (76) includes comparing two said semantic feature structures to determine whether said two exceed a threshold that is representative of a level of similarity.

10. Storage of computer readable programming in which said programming comprises:

   a dictionary (48) of words in which said words are associated with parts of speech;
   a rules base (40) configured to be cooperative with said dictionary in converting documents to semantic feature structures, said rules base including syntax rules, grammar rules and property rules (46, 54 and 56);
   a parts-of-speech tagger module (62) configured to access said rules base in applying said syntax rules to sentence structures of each said document so as to assign parts-of-speech tags to words of said sentence structure;
   a grammar-based module (66) operatively associated with said parts-of-speech module and said rules base to apply said grammar rules following assignments of said parts-of-speech tags, said grammar-based module being configured to identify said words of said sentence structures of said document with semantic features of activities described in said sentence structures; and
   a property-based module (68) operatively associated with said grammar-based module and said rules base to apply said property rules to following applications of said grammar rules, said property-based module being configured to assign semantic properties to at least some of said words, wherein at least some assignments of semantic properties are based on adjacencies of particular said words in said sentence structures.

11. The storage of claim 10 wherein said rules base (40) further includes ambiguity rules (52) that are specific to resolving ambiguities in said sentence structures, including ambiguities relating to use of pronouns.

12. The storage of claim 11 wherein said dictionary includes a thesaurus (50) for identifying synonyms.

FIG. 1

EP 1 515 241 A2

FIG. 2

FIG. 3

EP 1 515 241 A2

RECEIVE TEXTUAL ITEM — 60

↓

TAG WORDS WITH
SYNTACTIC CATEGORIES — 62

↓

APPLY AMBIGUITY RULES — 64

↓

APPLY GRAMMAR RULES — 66

↓

APPLY PROPERTY RULES — 68

↓

OUTPUT SEMANTIC
FEATURE STRUCTURE — 70

↓

PERFORM COMPARISON(S) — 76

# FIG. 4

FIG. 5

FIG. 6

INPUT REFERENCE SEMANTIC
FEATURE STRUCTURE — 78

SELECT COMMON NODE (i) — 80

SCORE NODE SELECTIVITY — 82

RECURSIVELY TRAVERSE
CONNECTED NODES — 84

ADDITIONAL COMMON
NODES
? — 86    YES

NO

GENERATE A FINAL SCORE — 88

THRESHOLD
EXCEEDED
? — 90    YES → BLOCK
DISPLAY — 92

NO

MORE
REFERENCE
STRUCTURES
? — 94

YES

NO

DISPLAY — 96

FIG. 7